# EUROPÄISCHE PATENTSCHRIFT

(11) **EP 2 525 942 B1**
(45) Veröffentlichungstag und Bekanntmachung des Hinweises auf die Patenterteilung: **10.12.2014**
(21) Anmeldenummer: 11700674.2
(22) Anmeldetag: 21.01.2011
(51) Int. Cl.: B23Q 1/38, F16C 29/02, F16C 32/06

(54) **MASCHINE MIT EINEM LUFTLAGER UND VERFAHREN ZUM BETREIBEN EINER MASCHINE**
MACHINE WITH AN AIR BEARING AND METHOD FOR OPERATING A MACHINE
MACHINE MUNIE D'UN PALIER À AIR ET PROCÉDÉ PERMETTANT DE FAIRE FONCTIONNER UNE TELLE MACHINE

(30) Priorität: 21.01.2010 DE 102010006297
(43) Veröffentlichungstag der Anmeldung: 28.11.2012
(73) Patentinhaber: Carl Zeiss Industrielle Messtechnik GmbH, 73447 Oberkochen (DE)
(72) Erfinder: STUMPP, Ernst, 89551 Koenigsbronn (DE)
(74) Vertreter: Witte, Weller & Partner Patentanwälte mbB
(86) Internationale Anmeldenummer: PCT/EP2011/050832
(87) Internationale Veröffentlichungsnummer: WO 2011/089222

(56) Entgegenhaltungen:
- EP-A1- 0 113 305
- EP-A1- 0 130 905
- DE-A1- 3 441 426
- GB-A- 778 801
- US-A- 3 943 972

## Beschreibung

Die vorliegende Erfindung betrifft eine Maschine mit einem Gestellaufbau, an dem ein Kopf angeordnet ist, wobei der Gestellaufbau einen Aktuator und ein Luftlager aufweist, um den Kopf zu verfahren, mit einer Druckluftzuführung, die mit dem Luftlager verbunden ist und einen Druckluftstrom für das Luftlager bereitstellt, mit einer Drossel, die den Druckluftstrom definiert, und mit einem ersten Betriebszustand, in dem ein hoher Druckluftstrom definiert ist und in dem der Aktuator betätigt werden kann.

Außerdem betrifft die Erfindung ein Verfahren zum Betreiben einer Maschine mit einem Gestellaufbau, an dem ein Kopf angeordnet ist, wobei der Gestellaufbau einen Aktuator und ein Luftlager aufweist, um den Kopf zu verfahren, mit den Schritten:
- Bereitstellen eines Druckluftstroms für das Luftlager,
- Bereitstellen einer Drossel, die den Druckluftstrom definiert,
- Herstellen eines ersten Betriebszustands, in dem ein hoher Druckluftstrom definiert wird und in dem der Aktuator betätigt werden kann.

Eine derartige Maschine ist beispielsweise aus DE 34 41 426 A1 bekannt.

Viele Maschinen, insbesondere Werkzeugmaschinen und Koordinatenmessgeräte, besitzen einen verfahrbaren Arbeitskopf. Bei einem Koordinatenmessgerät, das nachfolgend exemplarisch zugrunde gelegt wird, ist der Kopf häufig am unteren freien Ende einer vertikal angeordneten Pinole befestigt. Die Pinole ist verfahrbar, so dass der Messkopf senkrecht zu einem Messtisch verfahren werden kann. Der Messtisch dient zur Aufnahme eines Messobjekts. Die Pinole ist ihrerseits an einem Querträger eines Portals angeordnet, und sie kann an dem Querträger in einer ersten Horizontalrichtung mittels eines Schlittens verfahren werden. Das Portal kann zusammen mit der Pinole in einer zweiten Horizontalrichtung verfahren werden, so dass der Messkopf insgesamt in drei zueinander senkrechten Raumrichtungen verfahren werden kann. Dabei bilden die Pinole, der Schlitten und das Portal einen Gestellaufbau. Die maximalen Verfahrwege des Messkopfes entlang der drei Bewegungsrichtungen bestimmen ein Messvolumen, innerhalb dessen Raumkoordinaten an einem Messobjekt bestimmt werden können.

Zur Durchführung einer Messung wird das Messobjekt in dem Mess-volumen des Koordinatenmessgeräts angeordnet. Dies erfolgt in einer ersten Raumlage des Messobjekts relativ zu dem Messkopf. Anschließend wird der Messkopf zu einzelnen Messpunkten auf dem Messobjekt verfahren, um das Messobjekt zu vermessen. Zu diesem Zweck besitzt das Koordinatenmessgerät Aktuatoren, die das Portal, den Schlitten sowie die Pinole bei Betätigung in die jeweilige Raumrichtung bewegen. Als Aktuatoren werden typischerweise Schrittmotoren oder Servomotoren eingesetzt, da diese eine sehr exakte Positionierung des Messkopfs ermöglichen. Da bei Koordinatenmessgeräten eine sehr hohe Genauigkeit beim Verfahren des Messkopfs benötigt wird, werden die beweglichen Teile des Gestellaufbaus mittels Luftlagern reibungsfrei zueinander gelagert. Luftlager, oder aerostatische Lager, zeichnen sich dadurch aus, dass zwischen den zueinander gelagerten Teilen ein Luftspalt gebildet wird, indem zwischen die Teile Druckluft eingeblasen wird. Auf diese Weise ergibt sich ein Luftkissen zwischen den zueinander gelagerten Teilen, welches Reibung zwischen diesen Teilen verhindert.

In ähnlicher Weise können Werkzeugmaschinen aufgebaut sein. Diese besitzen als Arbeitskopf typischerweise eine Spindel mit einem Werkzeugträger, der zur Bearbeitung eines Werkstücks verfahren wird.

Die eingangs genannte DE 34 41 426 A1 beschreibt ein Koordinatenmessgerät in Portalbauweise, das Luftlager aufweist. Es ist vorgesehen, im Betrieb Druckluft von einer Druckluftquelle über ein Rohr und eine Drosselbohrung in die Luftlager einzublasen. Dabei strömt die Druckluft zwischen den zueinander gelagerten Bauteilen hindurch und bildet infolge ihrer Druckwirkung zwischen den Bauteilen einen Hohlraum in Form eines Spalts. Ist diese Lagerung gegeben, kann das Portal verschoben werden, so dass ein an dem Portal angeordneter Messkopf zu einem Messobjekt verfahren werden kann.

Typischerweise werden Luftlager im Betrieb einer Maschine stets mit Druckluft versorgt, so dass der Kopf zum Vermessen eines Messobjekts oder zum Bearbeiten eines Werkstücks verfahren werden kann. Während Standzeiten der Maschine werden die Luftlager weiterhin mit Druckluft versorgt, um Schäden zu verhindern. Diese würden auftreten, wenn die Luftlager unzureichend mit Druckluft versorgt sind und der Kopf verfahren wird. In diesem Fall liegen die zueinander zu lagernden Teile aneinander an, so dass sich Reibung zwischen den Teilen ergibt. Wird der Kopf in dieser Situation verfahren, führt dies zu Beschädigungen zwischen den Teilen aufgrund der Reibung. Weiter kann dies zu Beschädigungen an den Aktuatoren führen, welche aufgrund der Reibung überlastet werden können. Zudem ergibt sich bei hohen Standzeiten der Nachteil, dass Messeinrichtungen durch die Druckluft verschmutzt werden. Dies erfolgt insbesondere an Stoßstellen mehrteiliger Messeinrichtungen.

Ein vollständiges Abschalten der Maschine während Standzeiten führt dazu, dass die Maschine für den erneuten Betrieb angeschaltet werden muss. Dies führt zu einer Reihe von Initialisierungsmaßnahmen. Zunächst müssen die Luftlager ausreichend mit Druckluft versorgt werden. Anschließend muss eine aktuelle Position des Kopfs für eine Steuerung bestimmt werden. Zudem muss die Steuerung an aktuelle thermische Gegebenheiten der Maschine angepasst werden. Derartige Initialisierungsmaßnahmen führen zu einem hohen Zeitaufwand, welcher die Standzeit der Maschine erhöht und dadurch eine Verfügbarkeit der Maschine senkt.

G 80 31 939.7 schlägt ein Höhenmess- und Anreißgerät vor, das einen verschiebbaren Gerätefuß aufweist. Der Gerätefuß wird zum Verschieben auf einem Luftkissen gelagert, das von einer Druckluftzufuhr versorgt wird. Wird die Druckluftzufuhr unterbrochen, so senkt sich der Gerätefuß auf eine Richtplatte ab. Damit der Gerätefuß weiterhin leichtgängig verschoben werden kann, sind Rollen an der Unterseite des Gerätefußes vorgesehen, welche sich nach dem Absenken auf der Richtplatte abstützen.

US 3,943,972 beschreibt eine pneumatische Schaltung für industrielle Anwendungen. Eine Druckluftzufuhr ist über Schaltventile mit pneumatischen Zylindern verbunden. Die Schaltventile weisen Magnetschalter auf, die eine Schaltstellung der Schaltventile bewirken. Durch Betätigen eines Handschalters können so die Schaltstellungen verändert werden, so dass die Zylinder mit Druckluft versorgt werden. Weiter wird zwischen einer Druckluftquelle und den Zylindern ein pneumatisch gesteuertes Abschaltventil eingesetzt, dessen Schaltstellung von einem Steuerdruck abhängt. Dieses Abschaltventil kann eine Druckluftzufuhr zu den Zylindern bereitstellen oder diese unterbrechen. Zur Steuerung der Schaltstellung dieses Abschaltventils ist ein Verzögerungsglied in Form eines Druckluftspeichers und einer Druckluftdrossel vorgesehen. Bei Betätigung des Handschalters wird das Verzögerungsglied mit Druckluft versorgt. Bei Nichtbetätigung des Handschalters entweicht Luft aus dem Verzögerungsglied, so dass sich ein Luftdruck innerhalb des Verzögerungsglieds abbaut und somit der Steuerdruck zu dem Abschaltventil verringert, bis sich die Schaltstellung des Abschaltventils verändert. Somit ist eine Zeitabschaltung zwischen einer Druckluftquelle und Druckluftzylindern realisiert.

EP 0 546 694 beschreibt ebenfalls eine pneumatische Schaltung, welche nach einer bestimmten Zeitdauer eine Druckluftversorgung zu einem Zylinder abschaltet. Diese Zeitverzögerung basiert hier ebenfalls auf der Verwendung eines Verzögerungsglieds, das in Form eines Druckluftspeichers und einer Drossel realisiert ist.

Bei dem Betrieb derartiger Maschinen werden zur Sicherheit von Benutzer und Maschine typischerweise Sicherheitseinrichtungen eingesetzt. Aus sicherheitstechnischen Gründen dürfen Aktuatoren nach einem Abschalten nicht mehr automatisch eingeschaltet werden. Es werden beispielsweise Druckluftüberwachungen eingesetzt, welche bei einem Druckabfall oder fehlendem Druckluftstrom die gesamte Maschine vollständig abschalten. Ferner werden Fehlerüberwachungen eingesetzt, die einen Überstrom bei elektrischen Aktuatoren oder Schleppfehler erfassen, also Fehlern zwischen gewünschter und tatsächlicher Position. Ein Ansprechen jeder dieser Sicherheitseinrichtungen führt im Wesentlichen dazu, dass das Koordinatenmessgerät abgeschaltet wird und von einem Benutzer Gegenmaßnahmen durchgeführt werden müssen. Bis zur Durchführung der Gegenmaßnahmen wird so die Standzeit der Maschine erhöht. Beispielsweise würde ein einfaches Abschalten der Druckluft dazu führen, dass die Luftüberwachung bei einer Unterversorgung der Luftlager mit Druckluft vollständig abschalten würde, um Beschädigungen zu verhindern. Ein automatisches Wiedereinschalten der Maschine ist dann nicht möglich, so dass ein Benutzer die Maschine manuell einschalten und die oben beschriebenen Initialisierungsmaßnahmen durchführen muss.

Während der Initialisierungsmaßnahmen kann es zudem vorkommen, dass die aktuelle Position des Kopfs nicht mit einer angenommenen Position eines Lagereglers für den Kopf übereinstimmt. Dies führt bei der Initialisierung entweder dazu, dass der Lageregler neu initialisiert werden muss, oder der Kopf sprungartig in die vom Lageregler vorgegebene gewünschte Position verfahren wird. Dies kann zu Schleppfehlern führen, welche Messfehler oder fehlerhafte Werkstücke erzeugen.
EP-0 130 905 offenbart eine Maschine nach dem Oberbegriff des Anspruchs 1 und ein Verfahren nach dem Oberbegriff des Anspruchs 13.

Vor diesem Hintergrund ist es eine Aufgabe der vorliegenden Erfindung, eine Maschine und ein Verfahren zum Betreiben einer Maschine der eingangs genannten Art anzugeben, das auf sichere und einfache Weise eine hohe Verfügbarkeit der Maschine bei gleichzeitiger Drucklufteinsparung ermöglicht.

Gemäß einem Aspekt der Erfindung wird diese Aufgabe durch eine Maschine nach Anspruch 1 gelöst.

Gemäß einem weiteren Aspekt der Erfindung wird diese Aufgabe durch ein Verfahren nach Anspruch 13 gelöst.

Nach der neuen Vorrichtung und nach dem neuen Verfahren ist es vorgesehen, dass die Maschine zwei unterschiedliche Betriebszustände besitzt, die wahlweise eingesetzt werden können.

Der erste Betriebszustand zeichnet sich dadurch aus, dass dem Luftlager der hohe Druckluftstrom bereitgestellt wird, so dass das Luftlager ausreichend mit Druckluft versorgt ist, um eine gute Lagerwirkung zu erreichen. Weiter ist im ersten Betriebszustand vorgesehen, dass der Aktuator betätigt werden kann, um das Verfahren des Gestellaufbaus und damit des Kopfs zu ermöglichen. In anderen Worten, im ersten Betriebszustand kann die Steuer- und Auswerteeinheit den Aktuator direkt ansteuern und diesen damit betätigen, um den Gestellaufbau und damit den Kopf zu verfahren.

Der zweite Betriebszustand zeichnet sich dadurch aus, dass dem Luftlager ein niedrigerer Druckluftstrom zugeführt wird. Dieser Druckluftstrom ist niedriger als der hohe Druckluftstrom des ersten Betriebszustands. Dadurch wird erreicht, dass ein Verbrauch an Druckluft gegenüber dem ersten Betriebszustand verringert wird. Aufgrund des niedrigeren Druckluftstroms verringert sich die Lagerwirkung des Luftlagers. Damit das Luftlager durch das Betätigen des Aktuators nicht beschädigt werden kann, wird im zweiten Betriebszustand der Aktuator von der Steuer- und Auswerteeinheit vor dem Betätigen gesichert. Das heißt, der Aktuator kann nicht betätigt werden, solange der zweite Betriebszustand vorliegt. Erst ein Wechsel von dem zweiten in den ersten Betriebszustand führt dazu, dass der Aktuator betätigt werden kann und damit der Kopf verfahren werden kann.

Es kann beispielsweise vorgesehen sein, dass die Maschine von dem ersten in den zweiten Betriebszustand wechselt, wenn ein entsprechender Befehl von einem Anwender oder einer weiteren Maschine gegeben wird. Beispielsweise kann in einer Fertigungsstraße von einer Bestückungsmaschine der Befehl für den Übergang an die Maschine ergehen, wenn keine Messobjekte vorhanden sind, die von der Maschine vermessen werden sollen. Auf diese Weise wird immer dann Energie und Druckluft eingespart, wenn die Maschine nicht benötigt wird.

Die Maschine weist in bevorzugten Ausführungsformen den Gestell-a.ufbau auf, der ein Portal aufweist, an dem ein Schlitten angeordnet ist. Dieser Schlitten trägt in den bevorzugten Ausführungsformen eine Pinole, an deren Ende der Kopf befestigt ist. Um den Kopf verfahren zu können, ist das Portal verfahrbar an einem Tisch befestigt und mittels des Luftlagers reibungsfrei gelagert. Das Portal kann mittels eines Aktuators in einer Raumrichtung verfahren werden. An einem Querträger des Portals ist ein weiterer Aktuator und ein weiteres Luftlager vorgesehen. Dadurch kann der Schlitten in einer zweiten Raumrichtung verfahren werden. In entsprechender Weise ist die Pinole verfahrbar am Schlitten befestigt und mittels eines weiteren Luftlagers gelagert. Der Pinole wirkt mit einem zusätzlichen Aktuator zusammen, der die Pinole in einer dritten Raumrichtung verfahren kann. Alle Luftlager werden typischerweise über die eine gemeinsame Druckluftzuführung der Maschine mit dem Druckluftstrom versorgt. Zum Verfahren des Kopfs in die drei Raumrichtungen ist es vorzugsweise vorgesehen, dass die Steuer- und Auswerteeinheit alle Aktuatoren im ersten Betriebszustand betätigen kann. Entsprechend ist im zweiten Betriebszustand vorzugsweise vorgesehen, dass die Steuer- und Auswerteeinheit keine der drei Aktuatoren betätigen kann, um diese zu sichern.

Vorteilhaft hierbei ist, dass die Steuer- und Auswerteeinheit sowohl im ersten als auch im zweiten Betriebszustand betriebsbereit ist und damit zeitaufwendige Initialisierungsmaßnahmen bei einem Wechsel von dem ersten in den zweiten und von dem zweiten in den ersten Betriebszustand entfallen. In anderen Worten, die Maschine bleibt auch bei den gesicherten Aktuatoren einsatzfähig und kann beispielsweise durch einen automatischen Wechsel von dem zweiten in den ersten Betriebszustand jederzeit automatisch und sehr schnell weiter arbeiten. Weiter ist es vorteilhaft, dass durch den zweiten Betriebszustand eine benötigte Menge an Druckluft reduziert werden kann, da der Druckluftstrom im zweiten Betriebszustand gegenüber dem ersten Betriebszustand verringert wird. Auf diese Weise können Energie und damit Kosten für den Verbrauch von Druckluft verringert werden. Zudem ergibt sich der Vorteil, dass durch den niedrigeren Druckluftstrom im zweiten Betriebszustand ein Betriebsgeräusch der Maschine verringert wird. Durch den geringeren Ausstoß an Druckluft im Bereich der Luftlager verringert sich entsprechend ein Austrittsgeräusch. Dies führt zu einem humaneren Arbeitsplatz für einen Anwender der Maschine und findet dadurch eine wesentlich höhere Akzeptanz bei dem Anwender. Ein weiterer Vorteil ist, dass eine Verschmutzung von Messeinrichtungen verringert wird. Insbesondere erfolgt dies an Stellen, an denen das Gerät längere Zeit steht oder an denen mehrere Maßstäbe der Messeinrichtungen aneinanderstoßen und einen Spalt bilden. Ein weiterer Vorteil ist, dass sich auch bereits bestehende Maschinen in einfacher Weise umrüsten lassen, so dass auch ältere Maschinen mit den genannten Vorteilen versehen werden können. Zudem können vorhandene Sicherheitseinrichtungen umgangen oder angepasst werden, ohne dass Verluste der Sicherheit herbeigeführt werden.

Unter einer Maschine wird in der vorliegenden Anmeldung beispielsweise ein Koordinatenmessgerät, eine Werkzeugmaschine oder eine CNC-Maschine verstanden. Unter einem Kopf werden entsprechend der Ausgestaltung der Maschine, beispielsweise ein Messkopf, vorzugsweise in Form eines Tastkopfs, oder ein Werkzeug verstanden.

Somit ist die Aufgabe vollständig gelöst.

In einer Ausgestaltung ist der Druckluftstrom im zweiten Betriebszustand null.

In dieser Ausgestaltung wird die Drossel vollständig geschlossen, so dass das Luftlager drucklos ist. In diesem Fall liegen die mittels des Luftlagers gelagerten Teile aneinander. Vorteilhaft ist hierbei, dass das Maximum an Druckluft eingespart werden kann. Weiter ist es vorteilhaft, dass die Luftlager geräuschlos sind, was zu einem besonders humanen Arbeitsplatz führt. Zudem wird die Verschmutzung der Messeinrichtungen minimiert.

In weiteren Ausgestaltungen ist der Druckluftstrom im zweiten Betriebszustand größer Null.

In dieser Ausgestaltung ist es vorgesehen, dass ein geringer Druckluftstrom im zweiten Betriebszustand bereitgestellt wird. Dies ist insbesondere dann von Vorteil, wenn die Maschine eine Druckluftüberwachung aufweist, welche bei einem Druckabfall oder fehlendem Druckluftstrom die gesamte Maschine vollständig abschalten würde. Dadurch, dass der Druckluftstrom nicht vollständig abgeschaltet wird, wird verhindert, dass die Druckluftüberwachung die Maschine vollständig abschaltet. Somit ist ein besonders schneller Übergang von dem zweiten in den ersten Betriebszustand möglich. Ferner werden dadurch gleichzeitig die Vorteile der Verbrauchsreduktion und der Geräuschsreduktion realisiert.

In einer weiteren Ausgestaltung ist der Aktuator ein elektrischer Antrieb.

In dieser Ausgestaltung ist der Aktuator als elektrischer Antrieb ausgebildet, insbesondere als Elektromotor und noch genauer als Schrittmotor oder Servomotor. Dieser zeichnet sich dadurch aus, dass er auf sehr einfache Weise gesteuert werden kann und sehr einfach vor einem Betätigen gesichert werden kann. Weiter Vorteile des elektrischen Antriebs sind eine schnelle und exakte Bewegung sowie ein geringes Betriebsgeräusch.

In einer weiteren Ausgestaltung ist eine Schalteinrichtung vorgesehen, die eine elektrische Stromzufuhr zu dem elektrischen Antrieb schaltet, wobei die Stromzufuhr im ersten Betriebszustand mit dem elektrischen Antrieb verbunden ist und wobei die Stromzufuhr im zweiten Betriebszustand von dem elektrischen Antrieb getrennt ist, um den elektrischen Antrieb vor dem Betätigen zu sichern.

In dieser Ausgestaltung wird der elektrische Antrieb vor dem Betätigen dadurch gesichert, dass die elektrische Stromzufuhr zu dem Antrieb unterbrochen wird. Dies ist eine sehr einfache und effektive Maßnahme, um den Antrieb vor dem Betätigen zu sichern. Es ist insbesondere vorgesehen, dass die Schalteinrichtung von der Steuer- und Auswerteeinheit gesteuert werden kann. Dies erfolgt vorteilhaft, indem die Steuer- und Auswerteeinheit die elektrische Stromzufuhr für den ersten Betriebszustand zu dem elektrischen Antrieb schaltet und für den zweiten Betriebszustand die elektrische Stromzufuhr zu dem elektrischen Antrieb unterbricht. Weiter kann dadurch erreicht werden, dass die Steuer- und Auswerteeinheit in Betrieb bleiben kann und gleichzeitig der Zustand des elektrischen Antriebs im zweiten Betriebszustand unverändert verbleibt. Dies hat den Vorteil, dass keine Initialisierungsmaßnahmen bei dem Übergang vom zweiten in den ersten Betriebszustand vorgenommen werden, die sich auf die aktuelle Position des Kopfs bezieht. Auf diese Weise kann der Zeitaufwand für diese Initialisierungsmaßnahme eingespart werden. Als Schalteinrichtungen eigenen sich insbesondere Schütze oder Relais, die für industrielle Zwecke verfügbar sind und wirtschaftlich eingesetzt werden können.

In einer weiteren Ausbildung schaltet die Schalteinrichtung die Stromzufuhr von einer Leistungsendstufe zu dem elektrischen Antrieb.

In dieser Ausbildung weist die Maschine eine Leistungsendstufe auf, welche den elektrischen Antrieb mit elektrischem Strom versorgt. Durch das Schalten zwischen der Leistungsendstufe und dem elektrischen Antrieb wird erreicht, dass die Stromzufuhr abgeschaltet werden kann, während die Leistungsendstufe weiterhin mit Strom versorgt wird. Dies hat den Vorteil, dass die Leistungsendstufe ihre Betriebstemperatur beibehält. Dadurch werden Genauigkeitseinbußen beim Betätigen des elektrischen Antriebs im ersten Betriebszustand durch ein Abkühlen der Leistungsendstufe im zweiten Betriebszustand verhindert.

In einer weiteren Ausgestaltung schaltet die Schalteinrichtung die Stromzufuhr von einer Stromquelle zu einer Leistungsendstufe.

In dieser Ausgestaltung ist die Schalteinrichtung elektrotechnisch zwischen der Stromquelle und der Leistungsendstufe angeordnet. Die Schalteinrichtung kann somit die Leistungsendstufe für den zweiten Betriebszustand abschalten. Auf diese Weise kann elektrische Energie eingespart werden.

Ein Lageregler ist vorhanden, der eine Position des Kopfs mittels des Aktuators regelt, wobei der Lageregler im ersten und zweiten Betriebszustand in Betrieb ist.

Dieser Lageregler regelt die Position des Kopfs. Zu diesem Zweck weist der Lageregler Mittel zum Erfassen einer Momentanposition des Kopfs auf. Die ermittelten Werte, die Ist-Position, wird mit einer Soll-Position verglichen, die von der Steuer- und Auswerteeinheit vorgegeben wird. Durch Ermitteln einer Regeldifferenz zwischen Ist- und Soll-Position kann die Position des Kopfs durch Betätigen des Aktuators auf die Soll-Position geregelt werden. Durch den dauerhaften Betrieb des Lagereglers sowohl im ersten als auch im zweiten Betriebszustand wird verhindert, dass Initialisierungsmaßnahmen bezüglich des Lagereglers bei Übergängen zwischen den Betriebszuständen durchgeführt werden müssen. Somit wird der entsprechende Zeitaufwand für die Initialisierungsmaßnahmen eingespart. "In Betrieb" bedeutet, dass der Lageregler weiterhin seiner Regelungsaufgabe nachkommt und sowohl im ersten als auch im zweiten Betriebszustand die Soll-Position mit der Ist-Position vergleicht. Durch das Sichern des Aktuators wird verhindert, dass der Aktuator durch einen Betätigungsversuch des Lagereglers betätigt wird. In anderen Worten, der Lageregler läuft "leer". Auf diese Weise kann eine ungewollte Differenz zwischen Ist- und Soll-Position des Kopfs verhindert werden und damit ein Sprung des Kopfs bei einem Übergang von dem zweiten in den ersten Betriebszustand.

In einer bevorzugten Ausführungsform weist der Lageregler einen ersten und einen zweiten Modus auf, die in Abhängigkeit der Betriebszustände ausgeführt werden. Der erste Modus wird im ersten Betriebszustand ausgeführt und entspricht einem Normalbetrieb des Lagereglers. Der zweite Modus wird im zweiten Betriebszustand ausgeführt. In diesem Modus wird der Lageregler dahingehend modifiziert, dass die Sicherheitseinrichtungen entweder abgeschaltet oder dass die Sicherheitseinrichtungen durch Senden von modifizierten Daten an einem Auslösen gehindert werden. Zudem kann der Lageregler im zweiten Modus dahingehend angepasst sein, dass er in seiner Stellgröße begrenzt wird (*anti windup*)*,* so dass bei einem Übergang vom zweiten in den ersten Betriebszustand keine unverhältnismäßig großen Stellgrößen von dem Lageregler zu dem Aktuator gesendet werden. Durch die Verwendung der zwei Modi wird also erreicht, dass die Sicherheitseinrichtung nicht anspricht und die Maschine dadurch nicht vollständig abgeschaltet wird.

In einer weiteren Ausgestaltung ist eine Zeitsteuerung vorhanden, die einen Übergang von dem ersten in den zweiten Betriebszustand auslöst.

In dieser Ausgestaltung stellt die Steuer- und Auswerteeinheit die Betriebszustände ein. Der Übergang von dem ersten zu dem zweiten Betriebszustand wird aufgrund der Zeitsteuerung ausgelöst. Die Zeitsteuerung löst den Übergang beispielsweise zu einem vorbestimmten Zeitpunkt aus. Dies ist dann vorteilhaft, wenn Zeitpunkte bekannt sind, an denen die Maschine nicht gebraucht wird. In diesem Fall kann die Maschine schnell in den zweiten Betriebszustand gebracht werden. Zusätzlich oder alternativ kann die Zeitsteuerung auf Basis einer Zeitkontrolle erfolgen. Beispielsweise ist es denkbar, die Zeitsteuerung derart auszubilden, dass eine vorbestimmte Zeitspanne vergehen muss, in der der Kopf nicht verfahren wird oder mindestens ein Aktuator keine Fahrbefehle erhält. Nach Ablauf dieser Zeitspanne wird der Übergang von dem ersten in den zweiten Betriebszustand ausgelöst. Hierbei ist es vorteilhaft, dass sich die Maschine automatisch in den zweiten Betriebszustand bringt, ohne dass ein Anwender eingreifen muss. Auf diese Weise wird eine Maximierung der Druckluft- und der Energieeinsparungen erreicht.

In einer weiteren Ausgestaltung ist eine Eingabevorrichtung vorhanden, die bei Betätigung einen Übergang von dem zweiten in den ersten Betriebszustand auslöst.

In dieser Ausgestaltung wird eine Eingabevorrichtung eingesetzt, die einen Befehl übermittelt, um von dem zweiten in den ersten Betriebszustand überzugehen. Diese Eingabevorrichtung kann beispielsweise ein Taster (Tastschalter) sein, welcher von einem Anwender betätigt wird, wenn dieser die Maschine einsetzen will. Weiter ist es denkbar, dass die Eingabevorrichtung Daten von einer weiteren Maschine erhält, wie beispielsweise einer Bestückungsmaschine. Dies kann beispielsweise in einer Fertigungsstraße der Fall sein, wenn die entsprechende Bestückungsmaschine Messobjekte oder Werkstücke bereitstellen kann, die bearbeitet oder vermessen werden müssen. Auf diese Weise wird die Maschine nur dann in den ersten Betriebszustand versetzt, wenn die Maschine eingesetzt wird.

In einer weiteren Ausgestaltung ist die Eingabevorrichtung ein Steuerhebel zum Betätigen des Aktuators.

In dieser Ausgestaltung weist die Maschine einen Steuerhebel, Joystick, auf. Typischerweise werden derartige Steuerhebel von einem Anwender eingesetzt, um den Kopf manuell zu verfahren. Um einen schnellen Betrieb der Maschine zu ermöglichen, ist es von Vorteil, wenn bei einer Betätigung des Steuerhebels der Maschine automatisch in den ersten Betriebszustand übergeht. Der Anwender muss somit von dem zweiten Betriebszustand keine Kenntnis haben und kann die Maschine wie gewohnt bedienen, wobei gleichzeitig die Druckluft- und Energieeinsparungen erreicht werden.

In einer weiteren Ausgestaltung ist die Drossel ein Magnetventil.

In dieser Ausgestaltung ist die Drossel als Magnetventil ausgebildet. Das Magnetventil kann in einfacher Weise von der Steuer- und Auswerteeinheit angesteuert werden. Ferner sind derartige Magnetventile für industrielle Zwecke verfügbar, so dass sich ein wirtschaftlicher Vorteil ergibt.

In einer weiteren Ausgestaltung weist die Druckluftzuführung einen Druckluftsensor auf.

In dieser Ausbildung wird der Druckluftstrom innerhalb der Druckluftzuführung mittels des Druckluftsensors überwacht. Es ist insbesondere vorgesehen, dass der Druckluftsensor mit der Steuer- und Auswerteeinheit verbunden ist. Für die Überwachung des Druckluftstroms können Drucksensoren eingesetzt werden, welche zwischen der Drossel und dem Luftlager angeordnet sind. Somit kann die Steuer- und Auswerteeinheit erfassen, wann der hohe Druckluftstrom und wann der niedrigere Druckluftstrom definiert ist. Auf diese Weise kann festgestellt werden, in welchem Betriebszustand sich die Maschine befindet und es können zusätzliche Sicherheitsmaßnahmen realisiert werden. Alternativ oder zusätzlich ist es möglich, anhand der erfassten Daten festzustellen, welche Standzeiten und welche Betriebszeit von der Maschine erzeugt werden. Es ergibt sich somit die Möglichkeit Kosten, Kosteneinsparungen und Maschinenauslastung zu erfassen. Weiter ist es möglich, den Druckluftsensor als Strömungssensor auszubilden, der den Druckluftstrom selbst misst. Der Strömungssensor hat den Vorteil, dass er sowohl strömungstechnisch vor als auch nach der Drossel in der Druckluftzuführung angeordnet werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Ausführungsbeispiel der neuen Maschine, hier in Form eines bevorzugten Koordinatenmessgerätes,
- Fig. 2: eine schematische Darstellung von relevanten Komponenten der Maschine aus Fig. 1 in einem ersten Betriebszustand, und
- Fig. 3: die schematische Darstellung aus Fig. 2 in einem zweiten Betriebszustand.

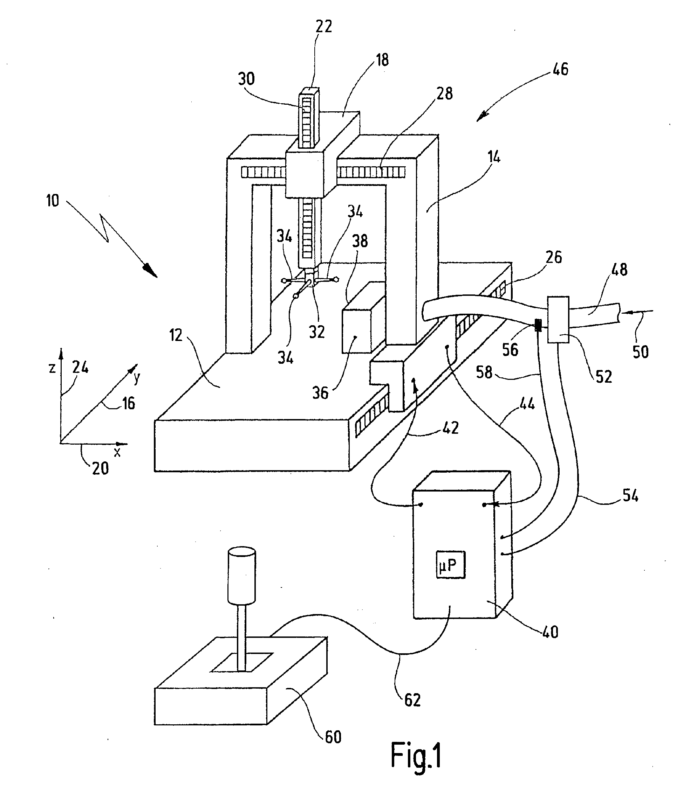

In Fig. 1 ist ein Koordinatenmessgerät in seiner Gesamtheit mit der Bezugsziffer 10 bezeichnet. Das Koordinatenmessgerät 10 ist hier beispielhaft in Portalbauweise dargestellt. Die Erfindung ist jedoch nicht auf einen bestimmten Gestellaufbau beschränkt und kann auch bei Koordinatenmessgeräten in anderer Bauweise eingesetzt werden. Das Koordinatenmessgerät 10 dient hier als Ausführungsbeispiel für die erfindungsgemäße Maschine. Die Erfindung ist auch nicht auf Koordinatenmessgeräte beschränkt, sondern kann beispielsweise auch bei Werkzeugmaschinen und anderen Maschinen mit luftgelagerten Teilen eingesetzt werden.

Das Koordinatenmessgerät 10 besitzt eine Basis 12, auf der ein Portal 14 angeordnet ist. Das Portal 14 kann mit Hilfe eines elektrischen Antriebs (hier nicht dargestellt) entlang einer Raumrichtung 16 verfahren werden, die üblicherweise als y-Achse bezeichnet wird. Am oberen Querträger des Portals 14 ist ein Schlitten 18 angeordnet, der in einer weiteren Raumrichtung 20 verfahren werden kann. Die Raumrichtung 20 wird üblicherweise als x-Richtung bezeichnet. Der Schlitten 18 trägt eine Pinole 22, die in einer dritten Raumrichtung 24 verfahren werden kann. Die Raumrichtung 24 wird üblicherweise als z-Achse bezeichnet. Mit den Bezugsziffern 26, 28 und 30 sind Messeinrichtungen bezeichnet, mit deren Hilfe die jeweils aktuelle Raumposition des Portals 14, des Schlittens 18 und der Pinole 22 bestimmt werden kann. Typischerweise handelt es sich bei den Messeinrichtungen 26, 28 und 30 um Glasmaßstäbe, die mit Hilfe geeigneter Sensoren abgelesen werden.

Am unteren freien Ende der Pinole 22 ist ein Kopf in Form eines Tastkopfs 32 mit Taststiften 34 angeordnet. Die Taststifte 34 sind hier jeweils einer der drei Raumrichtungen 16, 20 und 24 zugeordnet, wobei sie sich parallel zu den entsprechenden Raumrichtungen erstrecken. Die Taststifte 34 besitzen an ihren freien Enden jeweils eine Tastkugel. Die Tastkugel dient dazu, ein Messobjekt 36 an einer Messposition 38 anzutasten. Das Messobjekt 36 ist hier schematisch dargestellt. Mit Hilfe der Messeinrichtungen 26, 28 und 30 lassen sich Messwerte bezüglich einer Position des Tastkopfs 32 beim Antasten der Messposition 38 bestimmen. In Abhängigkeit davon werden die Raumkoordinaten der angetasteten Messposition 38 bestimmt.

Mit der Bezugsziffer 40 ist eine Steuer- und Auswerteeinheit bezeichnet. Die Steuer- und Auswerteeinheit 40 dient einerseits dazu, die elektrischen Antriebe für die Bewegung des Tastkopfs 32 entlang der drei Raumrichtungen 16, 20, 24 anzusteuern. Andererseits liest die Steuer- und Auswerteeinheit 40 Messwerte aus den Messeinrichtungen 26, 28 und 30 ein. Außerdem bestimmt sie in Abhängigkeit der Messwerte und in Abhängigkeit von Auslenkungen der Taststifte 34 die aktuellen Raumkoordinaten der Messposition 38. Zu diesem Zweck ist die Steuer- und Auswerteeinheit 40 mittels Leitungen 42 und 44 mit dem Portal 14 verbunden.

Das Portal 14, der Schlitten 18 und die Pinole 22 bilden gemeinsam einen Gestellaufbau 46, der dazu dient, den Tastkopf 32 zu verfahren. Um mechanische Reibung zwischen dem Messtisch 12, dem Portal 14, dem Schlitten 18 und der Pinole 22 zu vermeiden, sind zwischen jeweils zwei der Bauteile Luftlager vorgesehen, die hier nicht dargestellt sind. Die Luftlager werden von einer Druckluftzuführung 48 mit einem Druckluftstrom 50 versorgt. Die Druckluftzuführung 48 ist in Fig. 1 nur teilweise dargestellt. An der Druckluftzuführung 48 ist ein Magnetventil 52 vorgesehen, welches von der Steuer- und Auswerteeinheit 40 über eine Leitung 54 angesteuert werden kann. Das Magnetventil 52 definiert die Stärke des Druckluftstroms, der zu den Luftlagern geführt wird. Innerhalb der Druckluftzuführung 48 ist ein Druckluftsensor in Form eines Drucksensors 56 (alternativ zum Beispiel ein Durchflussmengensensor) angeordnet. Der Drucksensor 56 misst einen Luftdruck innerhalb der Druckluftzuführung 48. Die erfassten Werte werden über eine Leitung 58 an die Steuer- und Auswerteeinheit 40 weitergeleitet. Anhand der erfassten Werte kann die Steuer- und Auswerteeinheit 40 feststellen, ob und welche Menge an Druckluft an die Luftlager geführt wird. Ferner besteht die Möglichkeit, den Druckluftstrom 50 mittels des Drucksensors 56 aufzuzeichnen, um Auswertungen auf Basis des Druckluftverbrauchs durchführen zu können. Das Koordinatenmessgerät 10 weist weiter einen Steuerhebel 60 auf, welcher über eine Leitung 62 mit der Steuer- und Auswerteeinheit 40 verbunden ist. Der Steuerhebel 60 dient als Eingabevorrichtung für einen Anwender. Dieser kann mittels des Steuerhebels 60 den Tastkopf 32 verfahren.

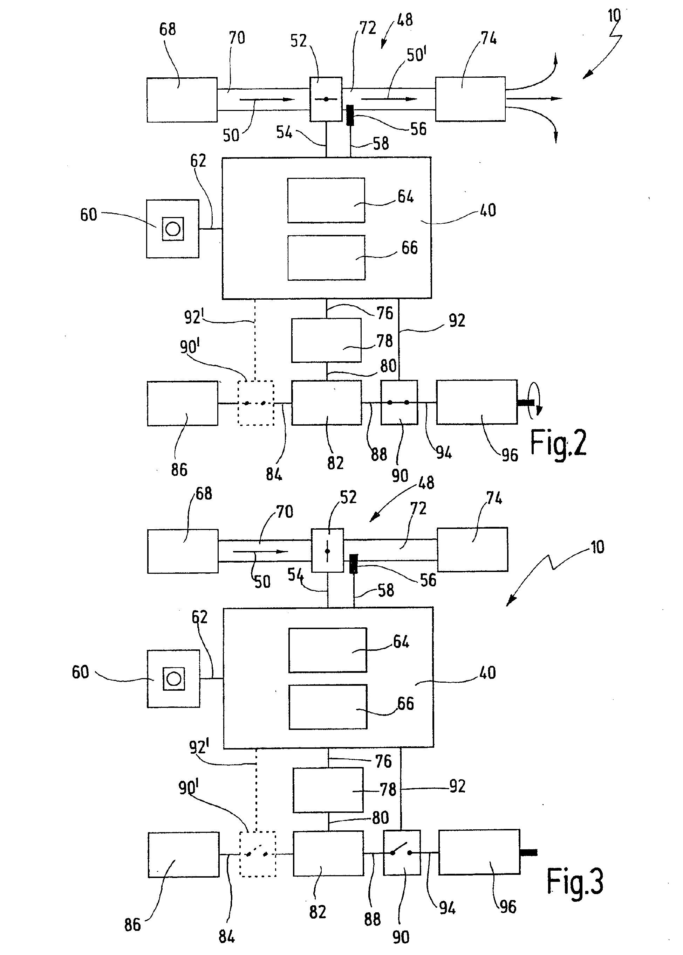

Fig. 2 zeigt eine schematische Darstellung relevanter Komponenten des Koordinatenmessgeräts 10 in einem ersten Betriebszustand. Die Steuer- und Auswerteeinheit 40 weist eine Zeitsteuerung 64 auf, die nach Ablauf einer vorbestimmten Zeitspanne einen Übergang von dem ersten Betriebszustand in einen zweiten Betriebszustand auslöst. Die Zeitspanne beginnt mit dem Zeitpunkt, ab dem der Tastkopf 32 nicht mehr verfahren wird und/oder Aktuatoren keine Fahrbefehle mehr erhalten. Wird der Tastkopf 32 innerhalb dieser Zeitspanne verfahren, so beginnt die Zeitspanne erneut zu laufen. Die Steuer- und Auswerteeinheit 40 weist ferner einen Lageregler 66 auf, welcher mittels der Messeinrichtungen (hier nicht dargestellt) eine Ist-Position des Tastkopfs 32 ermittelt, mit einer Soll-Position vergleicht und in Abhängigkeit von einer Differenz zwischen Ist- und Soll-Position ein Stellsignal für die elektrischen Antriebe erzeugt. Der Lageregler 66 regelt somit die Ist-Position des Tastkopfs in Abhängigkeit einer Differenz zwischen Ist- und Soll-Position des Tastkopfs. Ein Wert für die Soll-Position kann beispielsweise durch einen Anwender bestimmt werden oder durch ein Computerprogramm, das in der Steuer- und Auswerteeinheit 40 abläuft. Die Steuer- und Auswerteeinheit 40 steuert über die Leitung 54 das Magnetventil 52, welches in dem ersten Betriebszustand vollständig geöffnet ist. Dem Magnetventil 52 wird der Druckluftstrom 50 aus einer Druckluftquelle 68 über eine Rohrleitung 70 zugeführt. Aufgrund des geöffneten Magnetventils 52 wird der Druckluftstrom 50 in eine Rohrleitung 72 weitergeleitet, welche den Druckluftstrom 50 für ein Luftlager 74 bereitstellt. Das Luftlager 74 kann aufgrund des hohen Druckluftstroms 50' eine Lagerwirkung entfalten. Somit ist es möglich, den Gestellaufbau 46 in die Raumrichtungen 16, 20 und 24 zu verfahren, ohne dass sich Schäden zwischen den einzelnen Komponenten des Gestellaufbaus 46 ergeben.

Von der Steuer- und Auswerteeinheit 40 verläuft eine Leitung 76 zu einem Leistungsregler 78. Der Leistungsregler 78 setzt Stellsignale des Lagereglers 66 in einem elektrischen Leistungskreis um. Der Leistungsregler 78 ist zu diesem Zweck über eine Leitung 80 mit einer Leistungsendstufe 82 verbunden. Die Leistungsendstufe 82 wird über eine elektrische Leitung 84 von einer Stromquelle 86 mit elektrischem Strom versorgt. Ausgehend von der Leistungsendstufe 82 verläuft eine elektrische Leitung 88 zu einer Schalteinrichtung 90, welche in einer geschlossenen Schaltstellung dargestellt ist. Die Schaltstellung kann über eine Leitung 92 von der Steuerund Auswerteeinheit 40 eingestellt werden. Ausgehend von der Schalteinrichtung 90 verläuft eine weitere elektrische Leitung 94 zu einem Servomotor 96. Aufgrund der geschlossenen Schaltstellung des Schalters 90 kann der Servomotor 96 die Stellsignale des Lagereglers 66 in Bewegung umsetzen. Somit kann die Steuer- und Auswerteeinheit 40 den Servomotor 96 betätigen, um den Tastkopf 32 zu verfahren.

In der elektrischen Leitung 84 ist eine zweite Schalteinrichtung 90' angeordnet, welche über eine Leitung 92' mit der Steuer- und Auswerteeinheit 40 verbunden ist. Die Schalteinrichtung 90' ist eine alternative oder zusätzliche Schalteinrichtung 90' zu der Schalteinrichtung 90. Daher ist die Schalteinrichtung 90' sowie die Leitung 92' gestrichelt dargestellt. In dem ersten Betriebszustand weist die Schalteinrichtung 90' eine geschlossene Schaltstellung auf, so dass die Leistungsendstufe 82 und damit der Servomotor 96 mit Strom versorgt werden kann.

Durch einen Ablauf der vorbestimmten Zeitspanne in der Zeitsteuerung 64 geht das Koordinatenmessgerät 10 von dem ersten Betriebszustand in den zweiten Betriebszustand über.

Fig. 3 zeigt die relevanten Komponenten des Koordinatenmessgeräts 10 in schematischer Darstellung aus Fig. 2 in dem zweiten Betriebszustand. Im Unterschied zum ersten Betriebszustand ist im zweiten Betriebszustand das Magnetventil 52 hier vollständig geschlossen. Dadurch wird verhindert, dass der Druckluftstrom 50 an das Luftlager 74 weitergeleitet wird. Somit ist das Luftlager 74 drucklos und entfaltet keine Lagerwirkung. Weiter ist die Schalteinrichtung 90 geöffnet. Aufgrund der geöffneten Schaltstellung wird der Servomotor 96 nicht mit Strom versorgt. Somit ist der Servomotor 96 vor einem Betätigen durch die Steuer- und Auswerteeinheit 40 gesichert. Es ist damit ausgeschlossen, dass der Gestellaufbau 46 verfahren wird und aufgrund der fehlenden Lagerwirkung ein Schaden zwischen den einzelnen Komponenten des Gestellaufbaus 46 entsteht. Ferner wird dadurch verhindert, dass der Servomotor 96 bei einem Betätigen aufgrund der Reibung innerhalb des Gestellaufbaus 46 überlastet und dadurch beschädigt wird.

Die alternative oder zusätzliche Schalteinrichtung 90' ist ebenfalls in einer geöffneten Schaltstellung gezeigt. Es wird deutlich, dass aufgrund der Reihenschaltung der Schalteinrichtungen 90 und 90' nur eine der beiden Schalteinrichtungen 90, 90' geöffnet sein muss, um den Servomotor 96 zu sichern.

Für einen Übergang von dem zweiten Betriebszustand in den ersten Betriebszustand ist es vorgesehen, dass ein Anwender mittels des Steuerhebels 60 einen Fahrbefehl an die Steuer- und Auswerteeinheit 40 weitergibt oder dass Fahrbefehle an die Aktuatoren gesendet werden, welche dann den ersten Betriebszustand einstellt.

Auf diese Weise wird erreicht, dass zwischen dem ersten und zweiten Betriebszustand sehr schnell hin und her geschaltet werden kann und somit ein Druckluft- und Stromverbrauch innerhalb des Koordinatenmessgeräts minimiert wird.

Im zweiten Betriebszustand ist hier die Lageregelung 66 und vorteilhaft auch die Leistungsregelung 78 weiterhin aktiv. Das bedeutet, dass der Lageregler 66 weiterhin Stellsignale an den Leistungsregler 78 übergibt. Dieser übergibt dann weiter Stellsignale an die Leistungsendstufe 82. Durch die Beibehaltung der Regelvorgänge innerhalb des Lagereglers 66 wird verhindert, dass bei einem Übergang von dem zweiten in den ersten Betriebszustand eine Initialisierung des Lagereglers 66 vorgenommen werden muss, wodurch das Koordinatenmessgerät 10 sehr schnell in den ersten Betriebszustand übergehen kann. Daraus ergibt sich eine sehr hohe Verfügbarkeit des Koordinatenmessgeräts 10 bei gleichzeitiger Ersparnis von Druckluft und Energie.

## Patentansprüche

1. Maschine (10), mit einem Gestellaufbau (46), an dem ein Kopf (32) angeordnet ist, wobei der Gestellaufbau (46) einen Aktuator (96) und ein Luftlager (74) aufweist, um den Kopf (32) zu verfahren, mit einer Druckluftzuführung (48), die mit dem Luftlager (74) verbunden ist und einen Druckluftstrom (50) für das Luftlager (74) bereitstellt, mit einer Drossel (52), die den Druckluftstrom (50) definiert, mit einem ersten Betriebszustand, in dem ein hoher Druckluftstrom (50') definiert ist und in dem der Aktuator (96) betätigt werden kann, mit einer Steuer- und Auswerteeinheit (40), die dazu ausgebildet ist, den Aktuator (96) zu betätigen, und mit einem zweiten Betriebszustand, in dem ein zum hohen Druckluftstrom (50') niedrigerer Druckluftstrom definiert und der Aktuator (96) vor einem Betätigen gesichert ist, wobei die Steuer- und Auswerteeinheit (40) weiter dazu ausgebildet ist, die Drossel (52) zu steuern und den Aktuator (96) in dem zweiten Betriebszustand vor dem Betätigen zu sichern, **gekennzeichnet durch** einen lageregler (66), der eine Position des Kopfs (32) mittels des Aktuators (96) regelt, wobei der Lageregler (66) im ersten und zweiten Betriebszustand in Betrieb ist, und wobei **durch** das Sichern des Aktuators (96) verhindert wird, dass der Aktuator (96) **durch** einen Betätigungsversuch des Lagereglers (66) betätigt wird.

2. Maschine (10) nach Anspruch 1, **dadurch gekennzeichnet, dass** der Druckluftstrom (50) im zweiten Betriebszustand null ist.

3. Maschine (10) nach Anspruch 1, **dadurch gekennzeichnet, dass** der Druckluftstrom (50) im zweiten Betriebszustand größer null ist.

4. Maschine (10) nach einem der Ansprüche 1 bis 3, **dadurch gekennzeichnet, dass** der Aktuator (96) ein elektrischer Antrieb (96) ist.

5. Maschine (10) nach Anspruch 4, **gekennzeichnet durch** eine Schalteinrichtung (90), die eine elektrische Stromzufuhr zu dem elektrischen Antrieb (96) schaltet, wobei die Stromzufuhr im ersten Betriebszustand mit dem elektrischen Antrieb (96) verbunden ist und wobei die Stromzufuhr im zweiten Betriebszustand von dem elektrischen Antrieb (96) getrennt ist, um den elektrischen Antrieb (96) vor dem Betätigen zu sichern.

6. Maschine (10) nach Anspruch 5, **dadurch gekennzeichnet, dass** die Schalteinrichtung (90) die Stromzufuhr von einer Leistungsendstufe (82) zu dem elektrischen Antrieb (96) schaltet.

7. Maschine (10) nach Anspruch 5 oder 6, **dadurch gekennzeichnet, dass** die Schalteinrichtung (90) die Stromzufuhr von einer Stromquelle (86) zu einer Leistungsendstufe (82) schaltet.

8. Maschine (10) nach einem der Ansprüche 1 bis 7, **gekennzeichnet durch** eine Zeitsteuerung (64), die einen Übergang von dem ersten in den zweiten Betriebszustand auslöst.

9. Maschine (10) nach einem der Ansprüche 1 bis 8, **gekennzeichnet durch** eine Eingabevorrichtung (60), die bei Betätigung einen Übergang von dem zweiten in den ersten Betriebszustand auslöst.

10. Maschine (10) nach Anspruch 9, **dadurch gekennzeichnet, dass** die Eingabevorrichtung (60) ein Steuerhebel (60) zum Betätigen des Aktuators (96) ist.

11. Maschine (10) nach einem der Ansprüche 1 bis 10, **dadurch gekennzeichnet, dass** die Drossel (52) ein Magnetventil (52) ist.

12. Maschine (10) nach einem der Ansprüche 1 bis 11, **dadurch gekennzeichnet, dass** die Druckluftzuführung (74) einen Druckluftsensor (56) aufweist.

13. Verfahren zum Betreiben einer Maschine (10) mit einem Gestellaufbau (46), an dem ein Kopf (32) angeordnet ist, wobei der Gestellaufbau (46) einen Aktuator (96) und ein Luftlager (74) aufweist, um den Kopf (32) zu verfahren, mit den Schritten:
- Bereitstellen einer Steuer- und Auswerteeinheit (40), die dazu ausgebildet ist, den Aktuator (96) zu betätigen,
- Bereitstellen eines Druckluhstroms (50) für das Luftlager (74),
- Bereitstellen einer Drossel (52), die den Druckluftstrom (50) definiert,
- Herstellen eines ersten Betriebszustands, in dem ein hoher Druckluftstrom (50') definiert wird und in dem der Aktuator (96) betätigt werden kann, und
- Herstellen eines zweiten Betriebszustands, in dem ein zum hohen Druckluftstrom (50') niedrigerer Druckluftstrom definiert wird und der Aktuator (96) vor einem Betätigen gesichert wird,
wobei die Steuer- und Auswerteeinheit (40) die Drossel (52) steuert und den Aktuator (96) in den zweiten Betriebszustand vor dem Betätigen sichert, **gekennzeichnet durch** einen Lageregler (66), der eine Position des Kopfs (32) mittels des Aktuators (96) regelt, wobei der Lageregler (66) im ersten und zweiten Betriebszustand in Betrieb ist, und wobei **durch** das Sichern des Aktuators (96) verhindert wird, dass der Aktuator (96) **durch** einen Betätigungsversuch des Lagereglers (66) betätigt wird.

## Claims

1. A machine (10) having a frame structure (46) on which a head (32) is arranged, wherein the frame structure (46) comprises an actuator (96) and an air bearing (74) for displacing the head (32), having a compressed air feed (48) connected to the air bearing (74) and providing a compressed air flow (50) for the air bearing (74), having a restrictor (52) which defines the compressed air flow (50), having a first operating state in which a high compressed air flow (50') is defined and in which the actuator (96) can be actuated, having a control and evaluation unit (40) designed to control the actuator (96), and having a second operating state in which a compressed air flow lower than the high compressed air flow (50') is defined and the actuator (96) is secured against actuation, wherein the control and evaluation unit (40) is further designed to control the restrictor (52) and to secure the actuator (96) against actuation in the second operating state, **characterized by** a closed-loop position controller (66) which controls a position of the head (32) by means of the actuator (96), wherein the closed-loop position controller (66) is in operation in the first and in the second operating state, and wherein securing of the actuator (96) prevents the actuator (96) from being actuated by an actuation attempt of the closed-loop position controller (66).

2. The machine (10) of claim 1, **characterized in that** the compressed air flow (50) in the second operating state is zero.

3. The machine (10) of claim 1, **characterized in that** the compressed air flow (50) in the second operating state is greater than zero.

4. The machine (10) of claims 1 to 3, **characterized in that** the actuator (96) is an electrical drive (96).

5. The machine (10) of claim 4, **characterized by** a switching device (90) which switches an electrical current supply to the electrical drive (96), wherein the current supply is connected to the electrical drive (96) in the first operating state and wherein the current supply is separated from the electrical drive (96) in the second operating state, in order to secure the electrical drive (96) against actuation.

6. The machine (10) of claim 5, **characterized in that** the switching device (90) switches the current supply from a power output stage (82) to the electrical drive (96).

7. The machine (10) of claim 5 or 6, **characterized in that** the switching device (90) switches the current supply from a current source (86) to a power output stage (82).

8. The machine (10) of one of claims 1 to 7, **characterized by** a time control (64), which triggers a transition from the first operating state to the second operating state.

9. The machine (10) of one of claims 1 to 8, **characterized by** an input device (60), which when actuated triggers a transition from the second operating state to the first operating state.

10. The machine (10) of claim 9, **characterized in that** the input device (60) is a joystick (60) for actuating the actuator (96).

11. The machine (10) of one of claims 1 to 10, **characterized in that** the restrictor (52) is a solenoid valve (52).

12. The machine (10) of one of claims 1 to 11, **characterized in that** the compressed air feed (74) comprises a compressed air sensor (56).

13. A method for operating a machine (10) having a frame structure (46) on which a head (32) is arranged, wherein the frame structure (46) comprises an actuator (96) and an air bearing (74) for displacing the head (32), the method comprising the steps of
- providing a control and evaluation unit (40) designed to control the actuator (96), and
- providing a compressed air flow (50) for the air bearing (74),
- providing a restrictor (52), which defines the compressed air flow (50),
- establishing a first operating state, in which a high compressed air flow (50') is defined and in which the actuator (96) can be actuated, and
- establishing a second operating state, in which a compressed air flow lower than the high compressed air flow (50') is defined and the actuator (96) is secured against actuation,
wherein the control and evaluation unit (40) controls the restrictor (52) and secures the actuator (96) against actuation in the second operating state,
**characterized by** a closed-loop position controller (66) which controls a position of the head (32) by means of the actuator (96), wherein the closed-loop position controller (66) is in operation in the first and in the second operating state, and wherein securing of the actuator (96) prevents the actuator (96) from being actuated by an actuation attempt of the closed-loop position controller (66).

## Revendications

1. Machine (10), avec une structure de châssis (46) au niveau de laquelle une tête (32) est disposée, la structure de châssis (46) comportant un actionneur (96) et un palier à air (74) permettant de déplacer la tête (32), avec une amenée d'air comprimé (48) reliée au palier à air (74) et mettant à disposition un flux d'air comprimé (50) pour le palier à air (74), avec un étranglement (52) définissant le flux d'air comprimé (50), avec un premier état de fonctionnement dans lequel un flux d'air comprimé (50') élevé est défini et dans lequel l'actionneur (96) peut être actionné, avec une unité de commande et d'analyse (40) réalisée pour actionner l'actionneur (96) et avec un deuxième état de fonctionnement dans lequel un flux d'air comprimé inférieur au flux d'air comprimé (50') élevé est défini et dans lequel l'actionneur (96) est sécurisé avant un actionnement, l'unité de commande et d'analyse (40) étant en outre réalisée pour commander l'étranglement (52) et pour sécuriser l'actionneur (96) dans le deuxième état de fonctionnement, avant l'actionnement, **caractérisée par** la présence d'un système de réglage de palier (66) réglant une position de la tête (32) à l'aide de l'actionneur (96), le système de réglage de palier (66) fonctionnant dans le premier et le deuxième état de fonctionnement et la sécurisation de l'actionneur (96) empêchant que l'actionneur (96) ne soit actionné par une tentative d'actionnement du système de réglage de palier (66).

2. Machine (10) selon la revendication 1, **caractérisé en ce que** le flux d'air comprimé (50) est nul dans le deuxième état de fonctionnement.

3. Machine (10) selon la revendication 1, **caractérisée en ce que** le flux d'air comprimé (50) est supérieur à zéro dans le deuxième état de fonctionnement.

4. Machine (10) selon l'une quelconque des revendications 1 à 3, **caractérisée en ce que** l'actionneur (96) est un entraînement électrique (96).

5. Machine (10) selon la revendication 4, **caractérisée par** la présence d'un dispositif de connexion (90) connectant l'alimentation en courant électrique avec l'entraînement électrique (96), l'alimentation en courant étant reliée à l'entraînement électrique (96) dans le premier état de fonctionnement et l'alimentation en courant étant séparée de l'entraînement électrique (96) dans le deuxième état de fonctionnement, afin de sécuriser l'entraînement électrique (96) avant l'actionnement.

6. Machine (10) selon la revendication 5, **caractérisée en ce que** le dispositif de connexion (90) connecte l'alimentation en courant d'une marche terminale de puissance (82) jusqu'à l'entraînement électrique (96).

7. Machine (10) selon la revendication 5 ou 6, **caractérisée en ce que** le dispositif de connexion (90) connecte l'alimentation en courant d'une source de courant (86) jusqu'à une marche terminale de puissance (82).

8. Machine (10) selon l'une quelconque des revendications 1 à 7, **caractérisée par** la présence d'une commande temporisée (64) déclenchant une transition du premier étant de fonctionnement dans le deuxième état de fonctionnement.

9. Machine (10) selon l'une quelconque des revendications 1 à 8, **caractérisée par** la présence d'un dispositif d'entrée (60) déclenchant lors de son actionnement une transition du deuxième étant de fonctionnement dans le premier état de fonctionnement déclenche.

10. Machine (10) selon la revendication 9, **caractérisée en ce que** le dispositif d'entrée (60) est un levier de commande (60) servant à actionner l'actionneur (96).

11. Machine (10) selon l'une quelconque des revendications 1 à 10, **caractérisée en ce que** l'étranglement (52) est une électrovanne (52).

12. Machine (10) selon l'une quelconque des revendications 1 à 11, **caractérisée en ce que** l'amenée d'air comprimé (74) comporte un capteur d'air comprimé (56).

13. Procédé permettant de faire fonctionner une machine (10) avec une structure de châssis (46) au niveau de laquelle une tête (32) est disposée, la structure de châssis (46) comportant un actionneur (96) et un palier à air (74) permettant de déplacer la tête (32), avec les étapes suivantes:
- mise à disposition d'une unité de commande et d'analyse (40) réalisée pour actionner l'actionneur (96);
- mise à disposition d'un flux d'air comprimé (50) pour le palier à air (74);
- mise à disposition d'un étranglement (52) définissant le flux d'air comprimé (50);
- mise en place d'un premier état de fonctionnement dans lequel un flux d'air comprimé (50') élevé est défini et dans lequel l'actionneur (96) peut être actionné;
- mise en place d'un deuxième état de fonctionnement dans lequel un flux d'air comprimé inférieur au flux d'air comprimé (50') élevé est défini et dans lequel l'actionneur (96) est sécurisé avant un actionnement;
l'unité de commande et d'analyse (40) commandant l'étranglement (52) et sécurisant l'actionneur (96) avant l'actionnement dans le deuxième état de fonctionnement;
**caractérisé par** la présence d'un système de réglage de palier (66) réglant une position de la tête (32) à l'aide de l'actionneur (96), le système de réglage de palier (66) fonctionnant dans le premier et le deuxième état de fonctionnement et la sécurisation de l'actionneur (96) empêchant que l'actionneur (96) ne soit actionné par une tentative d'actionnement du système de réglage de palier (66).
